Europäisches Patentamt

European Patent Office

Office européen des brevets

(11) Publication number: **0 455 086 A2**

## EUROPEAN PATENT APPLICATION

(21) Application number: **91106435.0**

(22) Date of filing: **22.04.91**

(51) Int. Cl.5: **B60N 2/04**

(30) Priority: **04.05.90 IT 6733290**

(43) Date of publication of application:
**06.11.91 Bulletin 91/45**

(84) Designated Contracting States:
**AT BE CH DE DK ES FR GB GR IT LI LU NL SE**

(71) Applicant: **ELCAT S.p.A.**
**Corso Francia, 98**
**I-10090 Rivoli (TO)(IT)**

(72) Inventor: **Brandoli, Luigi**
**Corso Francia No. 98**
**I-10098 Rivoli (Torino)(IT)**

(74) Representative: **Lotti, Giorgio**
**c/o Ing. Barzanò & Zanardo Milano S.p.A. Via**
**Cernaia 20**
**I-10122 Torino(IT)**

(54) **A device for adjusting the angle and the height of a vehicle seat.**

(57) A device for adjusting the angle and the height of a vehicle seat comprises a front unit (A) and a back unit (B) positioned between the seat (10) and the dash-board (11). A first connecting rod (14) is hinged in (15) to the movable slide bearing (13) of the seat (10) and in (17) to first locking and unlocking means (19) of the device. A second connecting rod (30) worked by second locking and unlocking means (26) of the device, is hinged (31) to the movable slide bearing (13) and to the seat (10). The first (19) and second (26) locking and unlocking means consist of linear actuators that give when an electric or manual control is operated, and are binded (20, 27) to the movable slide bearing (13) in a position comprised between the units (A, B).

FIG.1

EP 0 455 086 A2

This invention is referred to a devise for adjusting the angle and the height of a vehicle seat.

The driver's seat as well as the passenger's seat are provided with devices that allow several movements for ensuring the best comfort during a journey. These traditional devices consist of guides for the longitudinal translation of the seat and of units that enable to change the angle of the hack of the seat with respect to the cushion.

Some devices allowing to lift and lower the whole seat with respect to the vehicle's platform have been adopted recently.

There are also devices that enable to pivot the whole seat horizontally and to position it within a large enough space so that the user can choose the most comfortable position, whatever his height and his requirements are.

The most sophisticated devices of this kind, that are also more complex and expensive, make it possible to turn the seat in very many positions in quite a large space so as to satisfy the requirements of any user. Other devices of this kind have usually toothed surfaces that do not enable to achieve an adjustment of the angle and the position of the seat in any point of the space in which the seat can be pivoted and lifted. These devices that, although they make it possibile to fix the seat in several positions, are binded by the number and the size of the cogs and the toothed sectors engaged by the seat adjustment actuator.

Some devices with manual control without toothed binding means are also known, but having continuous adjustments for the various angles. These devices have the drawback that it is difficult for the user to find the best position by adjusting them; moreover it is not possible to pivot the seat within a wide enough range of comfortable positions.

It is an object of this invention to provide a device for adjusting the angle and the height of a vehicle seat that is easily realized and therefore inexpensive, that enables to reach the favourite position within a very large space, so that it is extremely easy for the user to find the best position and to fix the seat in that position, overcoming in this way the drawbacks of the cited prior art.

For these and other purposes that will appear more clearly from the following detailed description, this invention discloses a device for adjusting the angle and the height of a vehicle seat characterized in that it comprises a front unit (A) and a back unit (B) positioned between the seat (10) and the dash-board (11), consisting respectively of a first connecting rod (14), hinged in (15) to the movable slide bearing (13) of the seat (10) and in (17) to first locking and unlocking means (19) of the device, and of a second connecting rod (30) worked by second locking and unlocking means (26) of the device, that is hinged (31) to the movable slide bearing (13) and to the seat (10); said first (19) and second (26) locking and unlocking means consisting of linear actuators that give when an electric or manual control is operated, and being binded (20, 27) to the movable slide bearing (13) in a position comprised between said units (A, B) and orientated after substantially opposite directions.

One favourite embodiment of the device according to this invention is now going to be described referring to the enclosed drawings, in which:

figs. 1 and 2   are schematical views of the device according to this invention in two different operating positions;

fig.3   shows a few positions that can be occupied by a seat provided with the device according to this invention; and

fig. 4   shows the fully retracted and lowest position of the seat with a passenger on it.

A vehicle seat 10 is slidably mounted on a platform 11 by conventional slidable means that comprise fixed guide bearings 12, that are anchored to the body of the vehicle, and movable guide bearings 13 that are binded to the seat 10.

The units that traslate on guides 12 and 13 are not described nor shown, as they are conventional and do not affect the device that is the object of this invention.

According to the invention, the device is made up by two units, a front one A and a back one B. these can be mounted in pairs, one on each side of the seat, or one by one, as it is shown in the drawings.

The front unit 14 has a plate A that works like a connecting rod and that is hinged in 15 to a lug bolt 16 of the movable guide bearing 13 of the seat. The plate 14 is hinged in 17 to a stem 18 of an adjusting and locking device 19 of the linear kind of locking devices that are actually used on some vehicles for adjusting and fixing the angle of the back of the seat. These linear locking devices can have a mechanical, hydraulic or air control; an example of a device with a mechanical control is given in IT 982523 of March 15, 1973.

The locking device 19 is in turn hinged in 20 to a bracket 25 that is integral with movable guide bearing 13. Plate 14 is provided with a pin 21 that can slide in a slot 22 of a lug bolt 23 integral with seat 10.

The second back unit B of the device according to this invention shows a second adjusting and locking device 26, similar to the previously described device 19, that is hinged in 27 to plate 25 in the same way as the adjusting and locking device 19 is hinged in 20. The stem 28 of this second adjusting and locking device 26 is hinged in 29 to the seat 10; also a connecting rod 30 is hinged in this point, whilst its other end 31 is hinged to said plate 25.

An elastic member 32 is finally hinged in 33 to lug bolts 34 of the movable guide bearings and in 35 to the base 24 of seat 10.

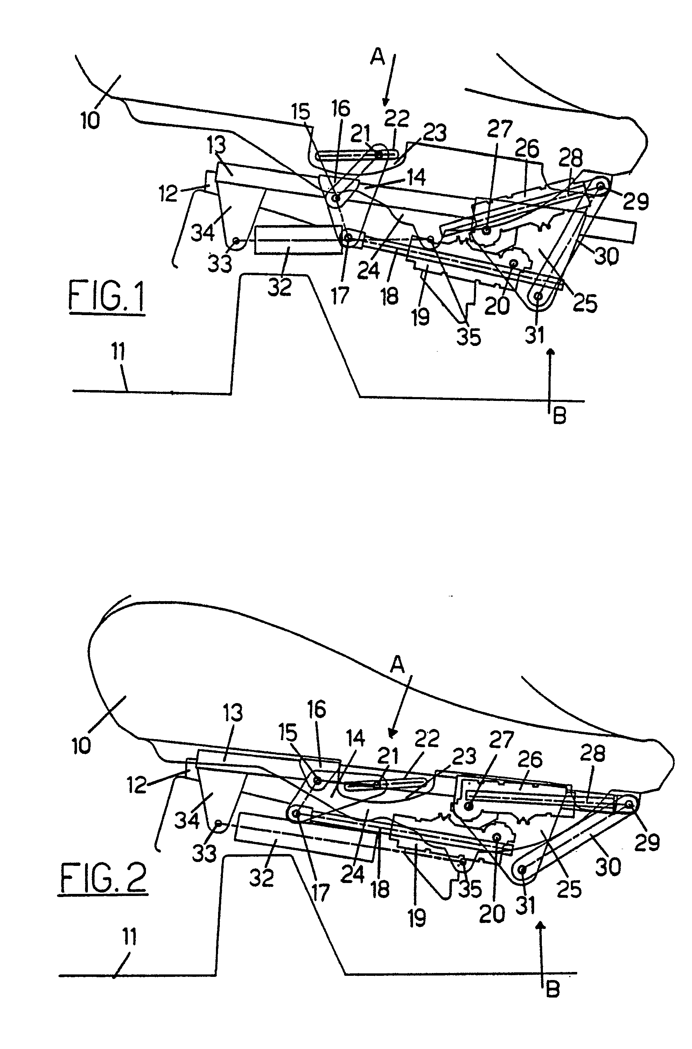

The position of fig. 2 corresponds to the completely lowered condition of the seat, that can be considered the resting position of the seat. The devices that allow the pivoting movement of the seat are the two adjusting and locking devices indicated with 19 and 26 that are actuated by means of a lever or a push-button, manually or electrically, and that enable to alternatively lock and unlock the members that make up the mechanism that realizes the pivoting movement of the seat. For this purpose it is possible to operate the two adjusting and locking devices 19 and 26 at the same time by means of a single lever or push-button, one for each adjusting and locking device.

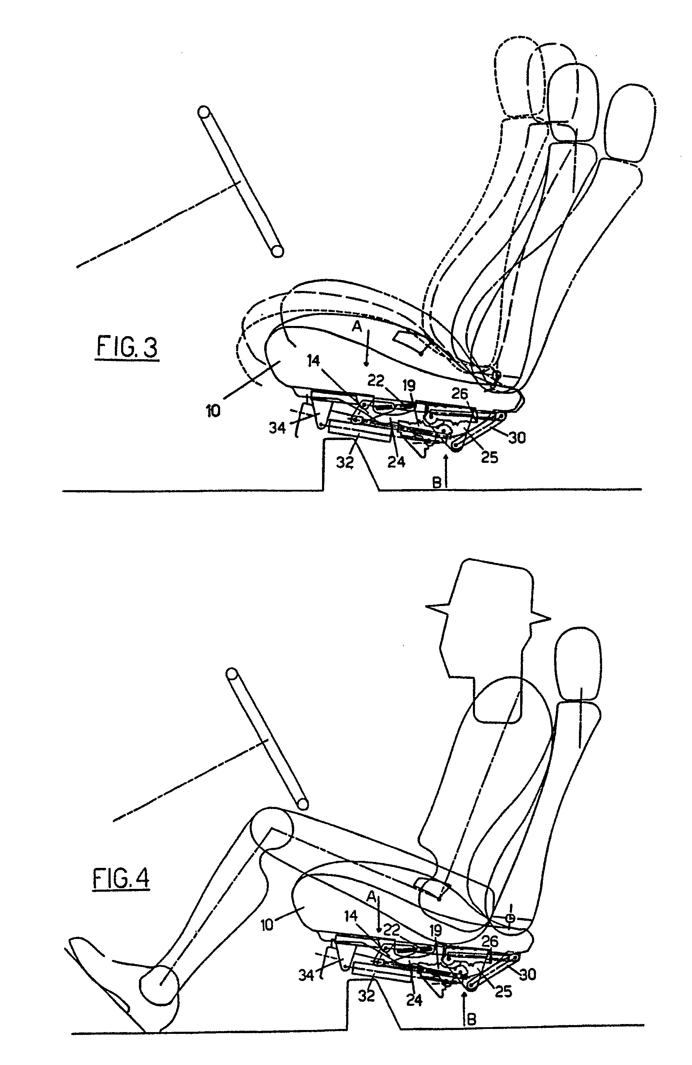

As it can be noticed by comparing the positions of fig. 2 and fig. 1, once the two devices 19 and 26 are unlocked, the passenger sitting on seat 10 by moving his body can get the seat to reach positions with different angles and different heights, as shown in fig. 3. Due to the fact that the device is gearless, the seat can occupy any intermediate position with no limitation within the range that is allowed by the above-described mechanism.

When the seat is lifted up as shown in the step from fig. 2 to fig. 1, the plate 14 is forcedly pivoted due to the withdrawal of stem 18 of the device 19 and consequently pin 21 slides along slot 22. At the same time also stem 28 of the device 26 will be withdrawn and connecting rod 30 will rotate upwardly around hinge 31 on plate 25. The user has to unlock devices 19 and 26 and pushing the seat he can get it to reach the desired position.

In practice, the front unit A enables the adjustment of the angle of the seat, while the back unit B enables the adjustment of the "seat" height.

By pushing the weight of the body backwards or forwards and acting also on the back of the seat or pushing his feet, the user can keep the position of front unit A unchanged or respectively back unit B and thus simply pivot the seat hinged on unit A or around hinge B, so that the seat will simply pivot with respect to these two hinges. By pushing the body properly, instead of obtaining two hinges in A or B, the seat will traslate upwards and move towards the dash-board as shown in fig. 1.

The unit is realized in such a way that all these movements of the seat are made possible by simply pushing the body properly on seat 10 and pushing the feet and the back after unlocking the devices 19 and 26 by means of a suitable manual control. One of the most particular and principal characteristics of the device lies in the fact that it is geraless, so the seat can occupy any position within the continuous range of motion of its own components. The elastic member 32 enables the balancing of the weights so that a is achieved regardless of the position chosen by the user.

It should also be noticed that the locking devices 19 and 26 may be controlled separately so that the user can decide to utilize the device making use of all the device's characteristics, that is a device that allows to adjust the angle and the height simultaneously, or rather to carry out the two adjustments separately, keeping unit A or unit B locked first.

## Claims

1. A device for adjusting the angle and the height of a vehicle seat characterized in that it comprises a front unit (A) and a back unit (B) positioned between the seat (10) and the dashboard (11), consisting respectively of a first connecting rod (14), hinged in (15) to the movable slide bearing (13) of the seat (10) and in (17) to first locking and unlocking means (19) of the device, and of a second connecting rod (30) worked by second locking and unlocking means (26) of the device, that is hinged (31) to the movable slide bearing (13) and to the seat (10); said first (19) and second (26) locking and unlocking means consisting of linear actuators that give when an electric or manual control is operated, and being binded (20, 27) to the movable slide bearing (13) in a position comprised between said units (A, B) and orientated after substantially opposite directions.

2. A device according to claim 1 wherein the locking and unlocking means (19, 26) are actuated simultaneously by a single push-button or lever.

3. A device according to claim 1 wherein the locking and unlocking means (19, 26) can be actuated separately by means of separate push-buttons or levers.

4. A device according to claim 1 wherein a weight balancing elastic member (32), suitable to reproduce a condition of dynamic equilibrium in any position occupied by the passenger, is inserted between the movable guide bearing 813) and the seat (10).

5. A device according to claim 1 wherein the first connecting rod (14) is provided with a pin (21) designed for sliding in a slot (22) of the seat (10) during the pivoting motion of the seat.

6. A device according to claim 1 wherein the locking and unlocking means (19, 26) are hinged (20, 27) to a plate (25) of the movable slide bearing (13) and also the second connecting rod (30) is hinged (31) to said plate (25).

7. A device according to claim 1 wherein the second means (26) operate on axis (29) with respect to which the second connecting rod (30) is hinged to the seat (10).

FIG.1

FIG.2

FIG. 3

FIG. 4